# EUROPEAN PATENT APPLICATION

(11) **EP 3 659 779 A1**
(43) Date of publication of application: **03.06.2020**
(21) Application number: 19210216.8
(22) Date of filing: 19.11.2019
(51) Int. Cl.: B29C 48/00, B29C 48/395, B29C 48/76, B29C 48/92, B29C 48/80

(54) **INNOVATION IN EXTRUSION MACHINE USED IN RECYCLING PROCESS OF PLASTIC-DERIVED PRODUCTS**

(30) Priority: 20.11.2018 TR 201817468
(71) Applicant: Feydas Mekina Ve Mühendislik Limited Sirketi, Seyhan, Adana (TR)
(72) Inventor: YOLDAS, Gökhan, Seyhan, Adana (TR)
(74) Representative: Martin Santos, Victoria Sofia

(57) **Abstract**

The invention relates to an extrusion machine which performs the recycling process in order to reuse the plastic-derived inert products made of polyethylene PE and polypropylene PP materials in film form; wherein it relates to innovations applied to save energy, reduce the humidity rate of the resulting product to zero and also increase the efficiency obtained from the machine to a minimum of 700 kg per hour, therefore eliminating the need for using a fan system in the product output section after the extrusion process of the plastic-derived products is performed by the extrusion machine A.

## Description

### TECHNICAL FIELD

The invention relates to the extrusion machine which performs the recycling process in order to reuse the plastic-derived inert products made of polyethylene PE and polypropylene PP materials in film form.

The invention relates particularly to the extrusion machine which performs the recycling process in order to reuse the plastic-derived inert products made of polyethylene PE and polypropylene PP materials in film form,
and which is developed to save energy, reduce the humidity rate of the resulting product to zero, and also increase the efficiency of the machine to a minimum of 700 kg per hour, therefore eliminating the need for using a fan system in the product output section after the extrusion process of the plastic-derived products is performed; and which consists of:
- a mirror rocket which is connected to the front part of the perforated mirror in which it is outputted via the zone I spiral shaft by heating the plastic-derived product passed through zone I bushing connected onto the main frame of the extrusion machine by means of heating bushing and zone I resistances,
- the degassing zone II bushing in which the re-extrusion process of the melt plastic-derived product outputted from the mirror rocket is performed,
- the zone II storage bushing connected between the zone II bushing and the perforated mirror,
- the zone II resistances which enables to reduce the humidity rate to zero by heating the plastic-derived product passing from the zone II storage bushing through the zone II bushing,
- the zone II spiral shaft which extrudes the plastic-derived product in the zone II storage bushing and zone II bushing, and is rotated by the rotation motion from the reducer by means of connecting to the zone I spiral shaft, and
- the product output bushing which is outputted such that the humidity rate is reduced to zero after the re-extrusion of the plastic-derived product in the zone II bushing by the zone II spiral shaft.

### PRIOR ART

Today, the extrusion machines have been quite widely used, which are "used to dehydrate the product after the crushing and washing processes of the plastic-derived inert products from pe (polyethylene) and pp (polypropylene) materials in film form.

The plastic-derived product to be recycled in the washing process with water increases the humidity rate. The increase in the humidity rate relatively reduces the efficiency of the machine and causes to workforce and time waste. The humidity rate of the plastic-derived products can be reduced to a maximum of about 3-4% in the recycling process with the extrusion machine. The capacity of these machines which obtain the products with these humidity rates has a maximum capacity of 300-350 kg per hour. In this case, the obtained efficiency per hour is quite below the desired levels.

In order to eliminate the aforementioned drawbacks in the state of the art, we have applied to the Utility Model No. TR 2016 07064, entitled *"PLASTIK TÜREVI ÜRÜNLERIN GERI DÖNÜ* 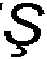 *ÜM* 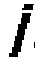 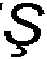 *LEM* 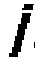 *NDE KULLANILAN SIKMA MAKINESINDE YAPILANMA".* The statement "The invention relates to an extrusion machine A which performs the recycling process in order to reuse the plastic-derived inert products made of polyethylene PE and polypropylene PP materials in film form; wherein it relates to developments configured to increase the efficiency of the extrusion machine A, reduce the humidity rate of the obtained product to zero and increase the capacity to a minimum of 600 kg per hour" falls within the summary of the related application.

When the summary and context of the said application N°. TR 2016 07064 is examined, the blade shearing process is carried out in the extrusion machine used in pe and pp film washing plants. In order to prevent shredded products from sticking to each other, the products are cooled by compressed air obtained from a fan system. The heat values of the heating resistances in the extrusion bushing are kept to a minimum so that the product exiting from the output section of the machine does not stick during shearing. As a result of this case, it causes the cooling fan to consume electric power and the main engine to consume high ampere (150 amperes) electric power.

The aforementioned and currently used extrusion machines are not able to dispense the 100% of water present in the product. Failure to remove the water causes to the inclusion of different additional machines in the system, resulting in loss of workforce and the consumption of extra electricity.

As a result due to the problems faced in the state of art and mentioned above, there is a need to make improvements in the related technical field.

### OBJECT OF THE INVENTION

Due to the existing problems in the prior art, it is intended to resolve all the problems described.

The object of the invention is to provide an extrusion machine which performs the recycling process in order to reuse the plastic-derived inert products made of polyethylene PE and polypropylene PP materials in film form.

Another object of the invention is particularly to provide the following with the extrusion machine which performs the recycling process in order to reuse the plastic-derived inert products made of polyethylene PE and polypropylene PP materials in film form,
and which is developed to save energy, reduce the humidity rate of the resulting product to zero, and also increase the efficiency of the machine to a minimum of 700 kg per hour, therefore eliminating the need for using a fan system in the product output section after the extrusion process of the plastic-derived products is performed; and which comprises the steps of:
- connecting the mirror rocket to the front part of the perforated mirror in which it is outputted via the zone I spiral shaft by heating the plastic-derived product passed through zone I bushing connected onto the main frame of the extrusion machine by means of heating bushing and zone I resistances,
- using the degassing zone II bushing in which the re-extrusion process of the melt plastic-derived product outputted from the mirror rocket is performed,
- connecting the zone II storage bushing between the zone II bushing and the perforated mirror,
- using the zone II resistances which enables to reduce the humidity rate to zero by heating the plastic-derived product passing from the zone II storage bushing through the zone II bushing,
- using the zone II spiral shaft which extrudes the plastic-derived product in the zone II storage bushing and zone II bushing, and is rotated by the rotation motion from the reducer by means of connecting to the zone I spiral shaft, and
- using the product output bushing which is outputted such that the humidity rate is reduced to zero after the re-extrusion of the plastic-derived product in the zone II bushing by the zone II spiral shaft.

### DESCRIPTION OF DRAWINGS

Figure 1 is the representative perspective view of the extrusion machine in a disassembled state from a different angle,
Figure 2 is the representative side view of the extrusion machine, showing the way of operation in an assembled and sectioned state.

### REFERENCE NUMERALS

**A.** Extrusion machine
**1.** Mainframe
**2.** Reducer
**3.** Inlet housing
**4.** Zone I bushing
**5.** Housing
**6.** Heating bushing
**7.** Zone I resistances
**8.** Zone I spiral shaft
**9.** Perforated mirror
**10.** Mirror rocket
**11.** Zone II bushing
**12.** Zone II storage bushing
**13.** Zone II resistances
**14.** Zone II spiral shaft
**15.** Product output bushing

### DETAILED DESCRIPTION OF THE INVENTION

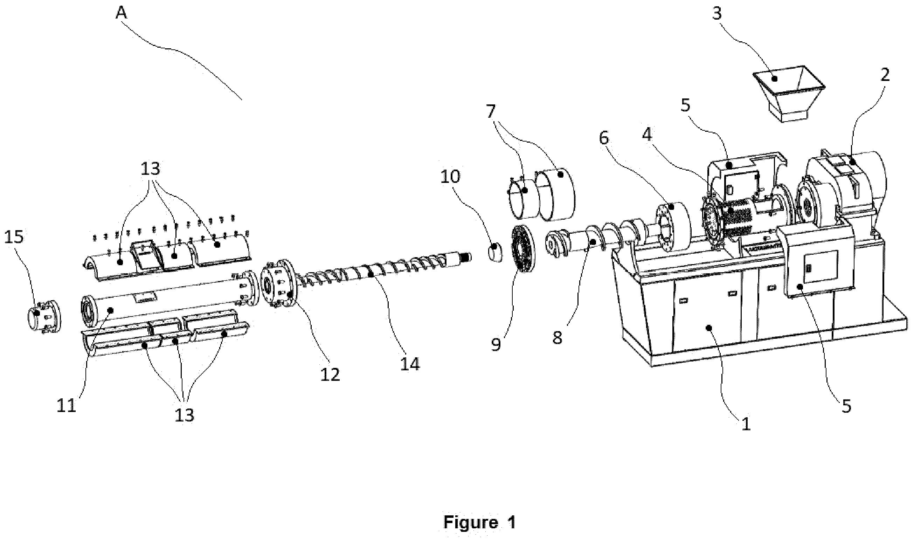

In figure 1, the representative perspective view of the extrusion machine which performs the recycling process in order to reuse the plastic-derived inert products made of polyethylene PE and polypropylene PP materials in film form is showed in a disassembled state from a different angle.

An extrusion machine A developed to save energy, reduce the humidity rate of the resulting product to zero as well as increase the efficiency obtained from the machine to a minimum of 700 kg per hour so that the need for using a fan system in the product outlet section after the extrusion process is applied to the plastic-derived products is eliminated, consists of a main frame 1, a reducer 2, an inlet housing 3, a zone I bushing 4, a housing bushing 5, a heating bushing 6, a zone I resistances 7, a zone I spiral shaft 8, a perforated mirror 9, a zone II bushing 11 the invention with a mirror rocket 10, a zone II storage bushing 12, a zone II resistances 13, a zone II spiral shaft 14, and a product outlet port 15.

In the manufacturing stage of the extrusion machine A, the main frame 1 is manufactured. A reducer 2 operated by the rotation motion obtained from the engine is connected onto the main frame 1. Zone I bushing 4 is connected to the side part of the reducer 2 via a flange. The inlet housing 3 is located on the upper part of the zone I bushing 4 and housing 5 on the outer part thereof. The heating bushing 6, on the outer part of which zone I resistances 7 are connected, is connected the side part of the zone I bushing 4. Zone I spiral shaft 8 is connected to the inner parts of the heating bushing 4 and zone I bushing 4 and the perforated mirror 9 to the side parts thereof.

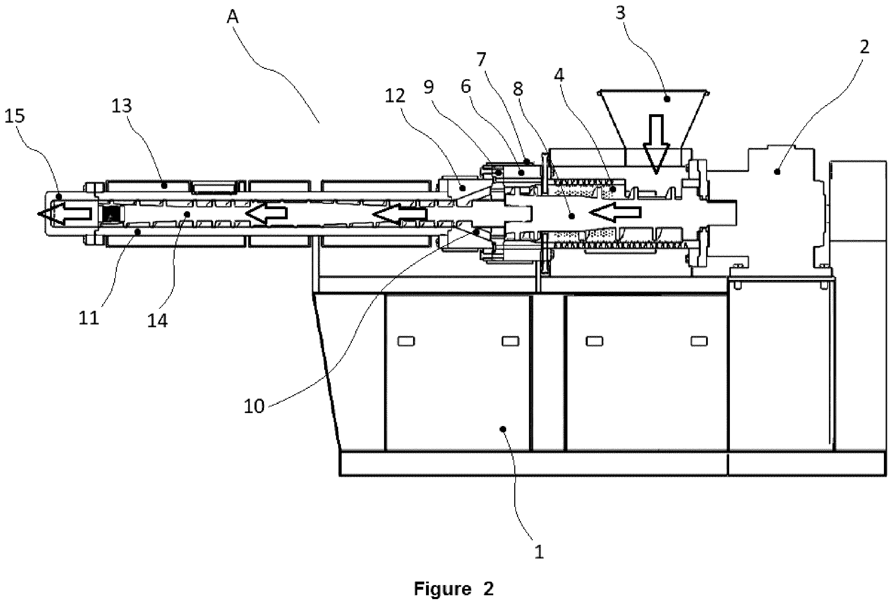

In order to increase the efficiency of the extrusion machine A after the aforementioned assembly process, the assembly of the perforated mirror 9, zone II bushing 11, zone II storage bushing 12, zone II resistances 13, zone II spiral shaft 14 and product outlet port 15, of the invention is performed as shown in figures 1 and 2.

In this process, the mirror rocket 10, zone II storage bushing 12 and the degassing zone II bushing 11 are connected to the front part of the perforated mirror 9 and zone II spiral shaft 14 is located on the inner part of the zone II bushing 11. The connection of the zone II resistances 13 is provided so as to grip the outer part of the zone II bushing 11. Finally, the product outlet bushing 15 is assembled to the front part of the zone II bushing 11.

As seen in Fig. 2, the reducer 2 is rotated by the rotation motion from the engine during the operation of the extrusion machine A and the zone I spiral shaft 8 and zone II spiral shaft 14 which are connected to the reducer 2 are rotated. In this stage, the inner parts of the heating bushing 6 and zone II resistances 11 are heated by operating the zone I resistances 7 and zone II resistances 13.

The plastic-derived products enter into the inlet housing 3 and pass directly through the zone I bushing 4 by operating the extrusion machine A as stated above. The plastic-derived products in a wet nature are guided here by compressing into the perforated mirror 9 by means of zone I spiral shaft 8. In this stage, the products passing through the heating bushing 6 heated by means of the zone I resistances 7 are melted and some amount of the humidity is removed. The melted products from the perforated mirror pass into the zone II storage bushing 12 and zone II bushing 11 through the zone II spiral shaft 14 after passing the mirror rocket (10) of the invention in order to be recompressed.

The moisture present in the product is evaporated because the zone II resistances 13 on its outer part generate heat on the inner part of the zone II bushing 11. Because the zone II bushing 11 has a degassing feature, the product exists from the product outlet bushing 15 such that all the moisture present in the mentioned product is removed.

Due to the recycling process of the plastic-derived products as stated;
- the efficiency of the extrusion machine is increased to a minimum of 700 kg per hour,
- the humidity rate of the product obtained from the extrusion machine is reduced to zero,
- the electricity consumption of the extrusion machine A with the rotation motion from a single reducer is reduced by approximately 25%,
- the heat requirement for the granule machine in the PE and PP plastic film recycling plants is reduced and the electricity consumption required by the main engine is reduced by approximately 30%, resulting in saving electricity by approximately up to 55% in the plants with more than one extrusion machine A,
- problems such as colour change, which is undesirable in the recycling process are eliminated,
- unnecessary workforce loss is eliminated because it does not require any person to be in charge during the operation of the extrusion machine A,
- because the water present in the recycled product is completely removed, the dependence on additional water removal apparatus or machine is eliminated, thus eliminating the additional electricity consumption, and
- because the currently used fan system is not used due to the elements of the invention in the extrusion machine A, the electricity-saving is also provided.

## Claims

1. An extrusion machine (A) which performs the recycling process in order to reuse the plastic-derived inert products made of polyethylene PE and polypropylene PP materials in film form; **characterized in that** the extrusion machine which is developed to save energy, reduce the humidity rate of the resulting product to zero, and also increase the efficiency of the machine to a minimum of 700 kg per hour, therefore eliminating the need for using a fan system in the product output section after the extrusion process of the plastic-derived products is performed comprises:
- a mirror rocket (10) which is connected to the front part of the perforated mirror (9) in which it is outputted via the zone I spiral shaft (8) by heating the plastic-derived product passed through zone I bushing (4) connected onto the main frame (1) of the extrusion machine (A) by means of heating bushing (6) and zone I resistances (7),
- the degassing zone II bush (11) in which the re-extrusion process of the melt plastic-derived product outputted from the mirror rocket (10) is performed,
- the zone II storage bushing (12) connected between the zone II bushing (11) and the perforated mirror (10),
- the zone II resistances (13) which enables to reduce the humidity rate to zero by heating the plastic-derived product passing from the zone II storage bushing (12) through the zone II bushing (11),
- the zone II spiral shaft (14) which extrudes the plastic-derived product in the zone II storage bushing (12) and zone II bushing (11), and is rotated by the rotation motion from the reducer (2) by means of connecting to the zone I spiral shaft (8), and
- the product output bushing (15) which is outputted such that the humidity rate is reduced to zero after the re-extrusion of the plastic-derived product in the zone II bushing (11) by the zone II spiral shaft (14).
